(19) Europäisches Patentamt / European Patent Office / Office européen des brevets

(11) **EP 3 086 666 B1**

(12) **EUROPEAN PATENT SPECIFICATION**

(45) Date of publication and mention
of the grant of the patent:
**11.10.2017 Bulletin 2017/41**

(21) Application number: **14818906.1**

(22) Date of filing: **09.12.2014**

(51) Int Cl.:
*A23L 33/10* (2016.01)      *A23L 29/00* (2016.01)
*A23L 19/00* (2016.01)      *A23L 2/02* (2006.01)
*A23L 2/39* (2006.01)

(86) International application number:
**PCT/EP2014/076990**

(87) International publication number:
**WO 2015/091092 (25.06.2015 Gazette 2015/25)**

(54) **BEVERAGE COMPRISING FERROUS PICOLINATE**

LEBENSMITTELZUSAMMENSETZUNG MIT EISENHALTIGEM PICOLINAT

COMPOSITION ALIMENTAIRE COMPRENANT DU PICOLINATE FERREUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2013 EP 13197435**

(43) Date of publication of application:
**02.11.2016 Bulletin 2016/44**

(73) Proprietor: **Nestec S.A.
1800 Vevey (CH)**

(72) Inventors:
• **GALAFFU, Nicola
01210 Ornex (FR)**
• **HABEYCH NARVAEZ, Edwin Alberto
CH-1012 Lausanne (CH)**
• **MERINAT, Sylvie Joëlle
1510 Moudon (CH)**

(74) Representative: **Couzens, Patrick John
Nestec S.A.
Centre de Recherche Nestlé
Vers-chez-les-Blanc
Case Postale 44
1000 Lausanne 26 (CH)**

(56) References cited:
**EP-A1- 1 011 344      US-A- 4 315 927
US-A1- 2002 192 308      US-A1- 2011 159 141
US-B1- 6 358 544**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a beverage comprising ferrous picolinate. In particular the invention relates to a beverage comprising fruit and/or vegetables, ferrous picolinate and phenolic chromophore compounds. Further aspects of the invention are a powder for the preparation of a beverage, the use of ferrous picolinate to fortify a beverage without colour change. A process for fortifying a beverage with iron is described. Billions of people around the world suffer from 'hidden hunger' or micronutrient malnutrition. They do not get enough of the micronutrients required to lead healthy productive lives from the foods that they eat. Micronutrients are vitamins and minerals (such as vitamin A, zinc, and iron) and are absolutely essential to good health. Micronutrient malnutrition can lower IQ, cause stunting and blindness in children, lower resistance to disease in both children and adults, and increase risks for both mothers and infants during childbirth. Iron deficiency is the most common and widespread nutritional disorder in the world. As well as affecting a large number of children and women in developing countries, it is the only nutrient deficiency which is also significantly prevalent in industrialized countries. In wealthier countries people may voluntarily choose a diet which may cause a reduced iron intake, such as a vegetarian diet. Food and beverage fortification is one method to increase iron intake along with dietary diversification and enhancement of iron absorption.

The World Health Organization (WHO) recommended that ferrous sulphate should be the first choice among iron fortificants because of its high bioavailability [Guidelines on food fortification with micronutrients. World Health Organization, 2006]. However, potentially adverse organoleptic changes can occur in certain food and beverage products fortified with ferrous sulphate that necessitate the choice of other iron forms that are less chemically reactive in that product matrix, although at the cost of lower bioavailability relative to ferrous sulphate. For example iron can accelerate oxidation reactions, adversely altering the product's flavour, and iron can also lead to colour changes.

Unwanted colour changes in compositions such as food and beverages may be caused by iron forming complexes with phenolic chromophore compounds. A chromophore is a region of a molecule where the energy difference between two different molecular orbitals is such that visible light can be absorbed by exciting an electron from its ground state into an excited state. Phenolic chromophore compounds have at least one phenol structure as part of the chromophore. Examples of phenolic chromophore compounds include anthocyanins, anthocyanidins, betanin, gallic acid, curcumin and carminic acid.

The problem of unwanted colour change may occur when the iron-containing material is initially added but it may also occur after prolonged storage or after application of heat. For example, colour change in food and beverage products fortified by iron may occur when the product is sterilized using heat. Many food and beverage products need to be sterilized to provide a long shelf life or to be safely consumed by sensitive groups such as the sick or very young.

The interaction between iron ions and phenolic chromophores can cause a change in the maximum absorption wavelength. Typically this is a change to a longer wavelength, such a change being referred to as a bathochromic shift. The light absorption intensity may also increase; this is the hyperchromic effect. For food and beverage products comprising phenolic chromophore compounds, a bathochromic shift due to the addition of iron causes the product to change colour, which is generally undesirable.

The problem of colour change when fortifying food and beverage products with iron is particularly apparent with products containing fruit. The colour of many fruits and vegetables is derived from phenolic chromophore compounds and so addition of iron leads to a bathochromic shift in the colour of the phenolic chromophore compounds resulting in an undesirable change in the colour of the product. Fruits and vegetables intrinsically provide a good source of beneficial dietary nutrients, and so are a good basis for delivering additional nutritional benefits to food and beverage products. Beverages provide a convenient and popular format for supplying beneficial dietary nutrients. Milk, whether plant milk such as soya, or animal milk such as cow's milk, provides a good source of nutrition. Undesirable colour changes in coloured milk beverages (such a fruit containing milk beverages) are particularly noticeable as the white opaque background provided by the milk enhances the visual impact of the colour. There is therefore a need to provide iron fortified beverages comprising fruit and/or vegetables, ferrous picolinate and phenolic chromophore compounds which do not exhibit undesirable colour changes. In particular, it would be desirable to be able to provide iron fortified milk beverages comprising ferrous picolinate and phenolic chromophore compounds which do not exhibit undesirable colour changes.

EP1011344 describes chocolate-flavoured beverage mixes and other edible mixes that are fortified with sources of iron such as ferrous fumarate and ferrous sulphate, yet do not develop undesirable gray colour when the beverage mix is reconstituted with aqueous liquids including fruit juice. The problem of gray colour development is solved by including edible acids such as citric or malic acid as buffering agents in the beverage mix so that the pH of the reconstituted chocolate beverage is about 6.5 or less. Controlling the pH to be acidic does not always suit the desired taste of the product.

WO97/15201 discloses colour-stable iron fortified fruit flavoured dry drink mixes where the iron is added as ferric sulphate encapsulated in solid fats, or as iron chelated with amino acids. However, it may not always be desirable to add solid fats into drinks; and iron chelated with amino acids is more expensive than many other iron compounds.

US4315927 describes dietary supplementation with metal picolinates such as ferrous picolinate. In one example, ferrous dipicolinate is administered to a woman with a history of iron deficiency anaemia, the ferrous dipicolinate being mixed with a cup of coffee.

There remains a need to provide improved or alternative beverage compositions which provide a nutritional source of iron without exhibiting undesirable colour changes. In particular there is a need to provide beverages comprising fruit and/or vegetables which provide iron with good bioavailability, stabilized against colour change by compounds which occur naturally.

An object of the present invention is to improve the state of the art and to provide a solution to overcome at least some of the inconveniences described above or at least to provide a useful alternative. Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to".

The object of the present invention is achieved by the subject matter of the independent claims. The dependent claims further develop the idea of the present invention.

Accordingly, an aspect of the present invention provides a beverage comprising fruit and/or vegetables, ferrous picolinate and phenolic chromophore compounds. Further aspects of the invention are a powder for the preparation of a beverage, said powder comprising ferrous picolinate and phenolic chromophore compounds; the use of ferrous picolinate to fortify a beverage without colour change and a process for fortifying a beverage with iron comprising preparing a beverage containing phenolic chromophore compounds, fruit and/or vegetables and adding ferrous picolinate.

Picolinic acid (pyridine-2-carboxylic acid) is an important natural chelator in the human body and in other mammals. It chelates minerals such as chromium, zinc, manganese, copper and iron. Ferrous picolinate is the coordination complex of the picolinate anion with $Fe^{2+}$ ions. Observations have suggested that administering physiological levels of ferrous picolinate can effectively improve iron profile in humans (US4315927).

The inventors surprisingly found that ferrous picolinate may be used to fortify beverages containing phenolic chromophore compounds with a much reduced colour change than usually experienced with iron fortification. For example, a strawberry fermented milk drink fortified with ferrous picolinate showed a lower degree of colour change than a strawberry fermented milk drink fortified with ferrous sulphate. The inventors also found that ferrous picolinate may be used to fortify beverages containing phenolic chromophore compounds without causing the problems of colour change associated with heat treatment. For example, after pasteurization at 95 °C for 2 minutes, a strawberry fermented milk beverage fortified with ferrous picolinate was closer in colour to unfortified strawberry fermented milk beverage than a strawberry fermented milk beverage fortified with ferrous sulphate. Yoghurts fortified with ferrous picolinate were found to have a similar iron bioaccessibility to those fortified with ferrous sulphate.

Consequently the present invention relates in part to a beverage comprising fruit and/or vegetables, ferrous picolinate and phenolic chromophore compounds. The iron may be present at a level of at least 1 parts per million by weight in the composition, for example at least 5 parts per million. The ferrous picolinate may be present at a level of at least 20 parts per million by weight in the composition, for example at least 100 parts per million. The ferrous picolinate may be present at a level to provide between 0.01 and 10 mg of iron per 100 g of the composition. The phenolic chromophore compounds may be comprised within the fruit and/or vegetables, or they may be added separately, for example, a natural colour such as carmine added to improve the colour. The phenolic chromophore compounds may contribute to the colour of the beverage. In the scope of the current invention the phenolic chromophore compounds contribute to the colour of the beverage if removing substantially all the phenolic chromophore compounds from the beverage would cause a difference in colour of sufficient magnitude that a human observer would perceive the difference between two samples shown one after the other but not simultaneously. For example, phenolic chromophore compounds contribute to the colour of the beverage where removing all the phenolic chromophore compounds would lead to a change in colour having a ΔEab* value greater than 2, for example greater than 3, measured on the CIE 1976 L*a*b* colour scale.

The CIE 1976 L*a*b* (hereinafter CIELAB) colour scale is one method of measuring colour proposed by the Commission Internationale de l'Éclairage (CIE) [CIE Technical Report, Colorimetry 2nd Edition, CIE 15.2 - 1986, corrected reprint 1996]. The CIELAB colour space is produced by plotting the quantities L*, a*, b* in rectangular coordinates. The L* coordinate of an object is the lightness intensity as measured on a scale from 0 (black) to 100 (absolute white). The a* and b* coordinates have no specific numerical limits. The parameter a* runs from pure green (negative a*) to pure red (positive a*), while b* runs from pure blue (negative b*) to pure yellow (positive b*).

In the CIELAB colour space, colour difference may be calculated as a single value taking into account the differences between the L*, a* and b* values of two samples. The colour difference ΔEab* is calculated as follows:

$$\Delta Eab^* = \sqrt{(\Delta L^*)^2 + (\Delta a^*)^2 + (\Delta b^*)^2}$$

Beverages, or drinks, are liquids consumed for refreshment or nourishment and include alcoholic and non-alcoholic drinks, carbonated drinks and fruit or vegetable juices.

The term fruit is used in the current specification in the culinary sense of the word. Fruits are the fleshy seed-associated structures of a plant that are sweet and edible in the raw state, such as apples, oranges, grapes, strawberries and bananas. This includes fruits from cultivated varieties of plants which produce seedless fruits such as seedless grapes and common varieties of bananas. The term fruit is not used here in the botanical sense; for example, beans, nuts and cereal grains are not considered fruits in the context of the current invention. The fruit may be for example selected from the group consisting of blackcurrant, cranberry, elderberry, red currant, boysenberry, grape, cherry, orange, lemon, lime, mandarin, tangerine, grapefruit, pineapple, mango, papaya, passion fruit, kiwifruit, guava, fig, date, apple, plum, strawberry, raspberry, blueberry, blackberry, apricot, pear, banana, quince, wolfberry and mixtures of these. The fruit may have a sugar content in its fresh ripe state of greater than 4 wt.%. The term vegetables is used in the current specification in the culinary sense of the word. Vegetables are edible plants or parts of plants, intended for cooking or eating raw. The beverage of the invention may comprise culinary fruit and/or culinary vegetables, ferrous picolinate and phenolic chromophore compounds.

The phenolic chromophore compounds of the invention may be selected from the group consisting of curcumin; carminic acid; betanin; polyphenols, including anthocyanins, anthocyanidins and gallic acid; and mixtures of these. These compounds are commonly found in food and beverages. The phenolic chromophore compounds may be comprised within other ingredients, for example gallic acid in banana puree, anthocyanins in blueberries or curcumin in turmeric. Alternatively, the phenolic chromophore compounds may be added directly as a colour, for example carminic acid added in the form of carmine which is an aluminium salt of carminic acid commonly used as a food colour. The phenolic chromophore compounds of the invention may be those commonly found in fruits or vegetables, for example the phenolic chromophore compounds of the invention may be selected from the group consisting of polyphenols, including anthocyanins, anthocyanidins and gallic acid; and mixtures of these. The phenolic chromophore compounds of the invention may be anthocyanins.

The greater the quantity of phenolic chromophore compounds in a beverage, the greater the potential colour change will be in the presence of iron. The phenolic chromophore compounds may be present in an amount between 0.0005 and 5 wt% of the composition

The beverage of the invention may comprise fruit at a level of at least 1 wt.% on a dry basis, for example at a level of at least 2 wt.% on a dry basis, for further example at a level of at least 5 wt.% on a dry basis. The maximum level of fruit may be close to 100 wt.%, for example a fruit smoothie fortified by ferrous picolinate at 0.015% would contain 99.985 wt.% fruit if there were no other ingredients. The fruit may, for example, be in the form of fresh fruit, fresh fruit pieces, fruit powder, dried fruit, or fruit purée. Fruit provides beneficial dietary nutrients, such as vitamins and minerals together with dietary antioxidants such as polyphenols. These strong nutritional credentials make beverages comprising fruit a suitable vehicle for further fortification, such as with iron. Fruit can also add attractive texture and colour to beverages. The fruit may be selected from the group consisting of strawberry, raspberry, blueberry, blackberry, apricot, pear, banana, quince, wolfberry and mixtures of these.

The beverage of the invention may comprise vegetables at a level of at least 1 wt.% in the beverage composition, for example at a level of at least 2 wt.% on a dry basis, for further example at a level of at least 5 wt.% on a dry basis. The maximum level of vegetables may be close to 100 wt.%, for example a carrot purée fortified by ferrous picolinate. The vegetables may, for example, be in the form of fresh vegetables, fresh vegetable pieces, vegetable powder or dehydrated vegetables. Vegetables provide beneficial dietary nutrients, such as vitamins and minerals. These strong nutritional credentials make beverage compositions comprising vegetables a suitable vehicle for further fortification, such as with iron. The vegetables may be selected from the group consisting of red cabbage, purple cauliflower, purple broccoli, purple sweet potato, olives, beetroot and mixtures of these. These vegetables have high levels of phenolic chromophore compounds and so are particularly susceptible to colour change with iron, so it is beneficial that beverages comprising these vegetables may be fortified without significant problems of colour change.

The beverages of the invention may be red in colour. Ferrous picolinate itself has a red/orange colour and so is particularly unnoticeable in red coloured beverages. "Red" within the scope of the present invention refers to a CIELAB hue angle $h_{ab}$ between 335° and 80°. An angle between 335° and 80° refers to all the angles between 335° and 360° and all the angles between 0° and 80°, (0° and 360° being equivalent). Red materials with a high lightness intensity may be described as pink. The hue angle $h_{ab}$ is calculated from a* and b* values as:

$$h_{ab} = \arctan\left(\frac{b^*}{a^*}\right)$$

where $h_{ab}$ lies between 0° and 90° if b* and a* are both positive, between 90° and 180° if b* is positive and a* is negative, between 180° and 270° if b* and a* are both negative, and between 270° and 360° if b* is negative and a* is positive.

The beverage of the invention may be fortified with other beneficial minerals such as magnesium and zinc. The beverage of the invention may comprise milk, for example, the beverage of the invention may comprise milk, fruit and/or vegetables, ferrous picolinate and phenolic chromophore compounds. The invention provides a beverage comprising ferrous picolinate, milk and phenolic chromophore compounds. The beverage of the invention may be a milk beverage. A milk beverage is a beverage based on milk, for example a beverage where at least 25 wt.% of the beverage composition derives from milk on a dry basis, for example at least 50 wt.% of the beverage composition derives from milk on a dry basis. The milk beverage may be shelf-stable ready-to-drink flavoured milk. The milk beverage may be a flavoured milk-shake. In the current invention the term "milk" refers not just to the white liquid produced by the mammary glands of mammals such as cows, sheep, buffalos and goats, but also to plant milks such as soy milk, almond milk, rice milk or coconut milk. The milk may be soy milk. The milk may be cow's milk, which is a good source of calcium, helping to form and maintain strong bones. The milk may be lactose free, for example where the lactose has been cleaved using a lactase enzyme.

The beverage may be an acidified milk beverage, for example a drinking yoghurt. In the context of the present invention the term yoghurt may include, but is not limited to, materials complying with local food labelling regulations concerning the term "yoghurt". Fortifying milk beverages with iron presents a problem if the beverage contains phenolic chromophore compounds, such as may be found in beverages containing fruit. For example, a blueberry milk drink, coloured by the anthocyanins in blueberries, will change colour after addition of iron; the anthocyanins undergoing a bathochromic shift. Similarly a banana drinking yoghurt, which was initially a pale yellow colour, may develop an unattractive grey-blue colour on addition of iron. Bananas comprise polyphenols such as gallic acid, catechin, epicatechin and epigallocatechin. It is an advantage that the invention provides iron fortified milk beverages where these colour change problems do not occur or are greatly reduced.

A further aspect of the invention is a powder for the preparation of a beverage, said powder comprising ferrous picolinate and phenolic chromophore compounds. Ferrous picolinate has the advantage that it can be combined with phenolic chromophore compounds without causing problems of colour change, either in the powder during storage or when the beverage is re-hydrated e.g. with water or milk. The powder for the preparation of a beverage may comprise fruit and/or vegetables, ferrous picolinate and phenolic chromophore compounds. Fruit and/or vegetable powders provide good taste and important vitamins when added to a beverage powder. The beverage powder may be for the preparation of a soup. In the scope of the current invention, soups which can be easily drunk directly from a cup are considered to be beverages. The beverage powder may also comprise sugar and/or artificial sweeteners to increase the palatability of the beverage when reconstituted. It is beneficial to be able to provide an iron fortified beverage powder comprising fruit and/or vegetable powders without problems of colour change.

The powder for the preparation of a beverage may also comprise dried milk. For example, the powder for the preparation of a beverage may be a fruit-containing powdered milk drink fortified with iron, such as a growing-up-milk for children. The powder for the preparation of a beverage may be a food supplement, for example it may help to provide balanced nutrition, such as a fruit-containing food supplement milk drink (e.g. milk and/or soy) to be given to children who are fussy eaters. The powder for the preparation of a beverage may comprise additional beneficial ingredients such as essential vitamins and minerals.

A further aspect of the invention is the use of ferrous picolinate to fortify a beverage without colour change. Some changes in appearance can be detected by appropriate instruments but would not be of concern to someone consuming a product. The term "colour change" in this specification may be considered to be a difference in colour of sufficient magnitude that a human observer would perceive the difference between two samples shown one after the other (not simultaneously). For example, a colour change may be considered to be a CIELAB ΔEab* colour difference greater than 2, for example greater than 2.5. In certain matrices, and at elevated levels of iron addition the reddish orange colour of ferrous picolinate may itself lead to a small colour change when ferrous picolinate is used to fortify a beverage product. Ferrous picolinate may be used to fortify a beverage such that there is a reduced colour change compared to ferrous sulphate added at the same total level of iron.

Ferrous picolinate may be used according to the invention to fortify a beverage without colour change over the product's shelf-life. For example, the CIELAB ΔEab* colour difference between an iron fortified beverage product at the time of its manufacture and the end of its shelf-life under recommended storage conditions may be less than 3, for example less than 2. Shelf life is the recommended length of time that foods, beverages, and many other perishable items can be stored during which the defined quality of a specified proportion of the goods remains acceptable under expected (or specified) conditions of distribution, storage and display. Typically a "best before date" (BBD) is printed on packaged perishable foods together with recommended storage conditions. Where such a BBD is indicated, the shelf-life is the time between manufacture and the BBD. Where a BBD is not indicated, the shelf-life is the equivalent period usual for the relevant product type. Ferrous picolinate may be used according to the invention to fortify a beverage such that there is a reduced colour change over the beverage's shelf-life compared to ferrous sulphate added at the same total level of iron.

Problems of colour change in iron-containing beverages frequently occur when the beverage is heated, for example during a sterilization or pasteurization processes. The invention provides a means to prevent undesirable colour changes in a beverage which has been both fortified with iron and heat treated.

Ferrous picolinate may be used to fortify a beverage without colour change wherein the beverage is heat treated. For example, the iron fortified beverage may have a ∆Eab* value less than 2.5, for example less than 2.0, after a heat treatment of 2 minutes at 95 °C when compared to the heat treated unfortified beverage. Ferrous picolinate may be used to fortify a beverage which is heat treated so that there is a reduced colour change over the beverage's shelf-life compared to ferrous sulphate added at the same total level of iron.

Ferrous picolinate may be used according to the invention to fortify a beverage which comprises fruit and/or vegetables. For example the beverage may be a vegetable or fruit smoothie. Ferrous picolinate may be used according to the invention to fortify a acidified milk beverage, for example a fruit-containing drinking yoghurt. A process for fortifying a beverage with iron comprising preparing a beverage containing fruit and/or vegetables and adding ferrous picolinate is described. Such a process has the advantage of producing an iron fortified beverage which, despite containing fruit and/or vegetables, may be less sensitive to colour change, for example the colour change due to iron interacting with phenolic chromophore compounds leading to bathochromic shifts. The process for fortifying the beverage with iron may further comprise heat treatment, for example heat treatment to reduce or eliminate food spoilage organisms. A process is also provided for fortifying a beverage powder with iron comprising preparing a beverage powder containing fruit and/or vegetable powders and adding ferrous picolinate. Fortifying a beverage with iron means increasing the content of iron in the beverage, normally to improve its nutritional quality. The iron may, or may not have been originally in the beverage.

Examples

*Example 1: Colour change in iron fortified strawberry fermented milk beverages*

Ferrous picolinate was prepared according to the procedure of US4315927 Example 3. A fermented milk beverage containing 2.1 % strawberry was iron fortified by the addition of ferrous sulphate (*Dr Paul Lohmann*™) (Sample A) or ferrous picolinate (Sample B). The amount of the ferrous salts were chosen to provide approximately 2.1 mg iron per 100g fermented milk beverage. Each ferrous salt was added to the fermented milk beverage and stirred under argon for 20 minutes. A further sample without iron fortification was also prepared in the same manner. Colour measurements were performed in 1x1 cm polystyrene cuvettes using an X-Rite ColorEye 7000A colorimeter. The colorimeter was set up with a D65 light source, 10 degree observer angle and with specular component included. The colour difference between the beverage with no iron salts and the iron fortified beverages was measured for each ferrous salt and expressed as ∆Eab* using the CIELAB colour scale.

The fermented milks were then heat treated at 95 °C for 2 minutes. Colour measurements were performed in the same manner as before. The colour difference between the beverage with no iron salts and the iron fortified beverages was measured for each ferrous salt and expressed as ∆Eab* using the CIELAB colour scale. Results are presented in the table below.

| Trial | Fe Salt | ∆Eab* on addition | ∆Eab* after heat treatment |
|-------|---------|-------------------|----------------------------|
| A | $FeSO_4 \times H_2O$ | 0.84 | 2.80 |
| B | Ferrous picolinate | 0.36 | 1.66 |

The beverage fortified with ferrous picolinate was closer in colour to the beverage with no added iron than the beverage fortified with ferrous sulphate. This was true both after simple addition of the salts and after heat treatment.

*Example 2: Iron bio-accessibility of iron fortified yoghurts*

The bio-accessibility of iron in a milk-containing food matrix (yoghurt) with different iron-containing compounds was measured using Caco-2 cells in conjunction with in vitro digestion [R.P. Glahn et al., Journal of Food Science, 64(5), 925-928. (1999)]. The level of iron in all the yoghurts was 100 μg/g.

In brief, first the yoghurt was subjected to a simulated gastric digestion with pepsin at pH=2, 37°C for 1 hour. This step was followed by a simulated intestinal digestion with pancreatin and bile at pH=7, 37°C for 2 hours. This second step took place on a dialysis membrane in the presence of Caco-2 monolayers. During the digestion process iron is released from the food matrix. Then, solubilized Fe can diffuse and be taken up by the cells. Thus, in response to higher intracellular Fe concentrations, Caco-2 cell will form ferritin. Therefore, the formation of ferritin is quantified as an indicator of Fe uptake by the cells. Ferritin is measured by ELISA in harvested Caco-2 cell 24 hours after the digestion. Results are normalized with the total protein contents of Caco2 cells and are expressed as ng ferritin/mg protein. To ensure the robustness of the results, three experiments were performed on separate days using cells from the same batches with three replicates. Data collected from the same treatment were pooled. Enzymes and buffer are used as blank. NaFeEDTA fortified at 100 $\mu$g/g with Fe was used as an internal standard and as positive control. The yoghurts fortified with ferrous picolinate were found to have a similar bioaccessibility to those fortified with $FeSO_4$.

**Claims**

1. Beverage comprising fruit and/or vegetables, ferrous picolinate and phenolic chromophore compounds.

2. A beverage according to claim 1 wherein the phenolic chromophore compounds are selected from the group consisting of curcumin, carminic acid, betanin, polyphenols and mixtures of these.

3. A beverage according to claim 1 or 2 wherein the fruit is selected from the group consisting of strawberry, raspberry, blueberry, blackberry, apricot, pear, banana, quince, wolfberry and mixtures of these.

4. A beverage according to any one of claims 1 to 3 wherein the beverage is red in colour.

5. A beverage according to any one of claims 1 to 4 wherein the beverage is a milk beverage.

6. A beverage according to claim 5 wherein the milk is cow's milk or soy milk.

7. A beverage according to claim 5 or claim 6 wherein the beverage is an acidified milk beverage.

8. Powder for the preparation of a beverage, said powder comprising ferrous picolinate and phenolic chromophore compounds.

9. Use of ferrous picolinate to fortify a beverage without colour change.

10. Use of ferrous picolinate according to claim 9 wherein the colour change over the beverage's shelf-life is prevented.

11. Use of ferrous picolinate according to claim 9 or claim 10 wherein the beverage is heat treated.

12. Use of ferrous picolinate according to any one of claims 9 to 11 wherein the beverage comprises fruit and/or vegetables.

13. Use of ferrous picolinate according to any one of claims 9 to 12 wherein the beverage is an acidified milk beverage.

**Patentansprüche**

1. Getränk, umfassend Obst und/oder Gemüse, eisenhaltiges Picolinat und phenolische Chromophorverbindungen.

2. Getränk nach Anspruch 1, wobei die phenolischen Chromophorverbindungen ausgewählt sind aus der Gruppe bestehend aus Curcumin, Karminsäure, Betanin, Polyphenolen und Mischungen dieser.

3. Getränk nach Anspruch 1 oder 2, wobei das Obst ausgewählt ist aus der Gruppe bestehend aus Erdbeere, Himbeere, Blaubeere, Brombeere, Aprikose, Birne, Banane, Quitte, Wolfsbeere und Mischungen dieser.

4. Getränk nach einem der Ansprüche 1 bis 3, wobei das Getränk eine rote Färbung aufweist.

5. Getränk nach einem der Ansprüche 1 bis 4, wobei das Getränk ein Milchgetränk ist.

6. Getränk nach Anspruch 5, wobei es sich bei der Milch um Kuhmilch oder Sojamilch handelt.

7. Getränk nach Ansprüche 5 oder Anspruch 6, wobei das Getränk ein Sauermilchgetränk ist.

8. Pulver zum Zubereiten eines Getränks, wobei das Pulver eisenhaltiges Picolinat und phenolische Chromophorverbindungen umfasst.

9. Verwendung von eisenhaltigem Picolinat zum Anreichern eines Getränks ohne Farbveränderung.

10. Verwendung von eisenhaltigem Picolinat nach Anspruch 9, wobei die Farbveränderung über den Haltbarkeitszeitraum des Getränks verhindert wird.

11. Verwendung von eisenhaltigem Picolinat nach Anspruch 9 oder Anspruch 10, wobei das Getränk wärmebehandelt wird.

12. Verwendung von eisenhaltigem Picolinat nach einem der Ansprüche 9 bis 11, wobei das Getränk Obst und/oder Gemüse umfasst.

13. Verwendung von eisenhaltigem Picolinat nach einem der Ansprüche 9 bis 12, wobei das Getränk ein Sauermilchgetränk ist.


**Revendications**

1. Boisson comprenant des fruits et/ou des légumes, du picolinate ferreux et des composés chromophores phénoliques.

2. Boisson selon la revendication 1, dans laquelle les composés chromophores phénoliques sont choisis dans le groupe constitué de curcumine, acide carminique, bétanine, polyphénols et des mélanges de ceux-ci.

3. Boisson selon la revendication 1 ou 2, dans laquelle le fruit est choisi dans le groupe constitué de fraise, framboise, myrtille, mûre, abricot, poire, banane, coing, baie de goji et des mélanges de ceux-ci.

4. Boisson selon l'une quelconque des revendications 1 à 3, où la boisson est de couleur rouge.

5. Boisson selon l'une quelconque des revendications 1 à 4, où la boisson est une boisson lactée.

6. Boisson selon la revendication 5, dans laquelle le lait est du lait de vache ou du lait de soja.

7. Boisson selon la revendication 5 ou la revendication 6, où la boisson est une boisson lactée acidifiée.

8. Poudre pour la préparation d'une boisson, ladite poudre comprenant du picolinate ferreux et des composés chromophores phénoliques.

9. Utilisation de picolinate ferreux pour enrichir une boisson sans changement de couleur.

10. Utilisation de picolinate ferreux selon la revendication 9, dans laquelle le changement de couleur est empêché au cours de la durée de conservation de la boisson.

11. Utilisation de picolinate ferreux selon la revendication 9 ou la revendication 10, dans laquelle la boisson est traitée thermiquement.

12. Utilisation de picolinate ferreux selon l'une quelconque des revendications 9 à 11, dans laquelle la boisson comprend des fruits et/ou des légumes.

13. Utilisation de picolinate ferreux selon l'une quelconque des revendications 9 à 12, dans laquelle la boisson est une boisson lactée acidifiée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1011344 A
- WO 9715201 A
- US 4315927 A

**Non-patent literature cited in the description**

- Guidelines on food fortification with micronutrients. *World Health Organization,* 2006
- CIE Technical Report, Colorimetry. 1986
- **R.P. GLAHN et al.** *Journal of Food Science,* 1999, vol. 64 (5), 925-928